# FASCICULE DE BREVET EUROPEEN

(11) **EP 0 605 283 B1**
(45) Date de publication et mention de la délivrance du brevet: **22.01.1997**
(21) Numéro de dépôt: 93403078.4
(22) Date de dépôt: 17.12.1993
(51) Int. Cl.: H02K 7/06, H02K 11/00

(54) **Vérin électrique équipé d'un capteur de position**
Mit einem Lagesensor versehene elektrische Schraubenwinde
Electic screw jack equipped with a position sensor

(30) Priorité: 30.12.1992 FR 9215908
(43) Date de publication de la demande: 06.07.1994
(73) Titulaire: AUXILEC, F-78400 Chatou (FR)
(72) Inventeur: Skorucak, Bela, F-94117 Arcueil Cédex (FR); Digoin, Edmond, F-94117 Arcueil Cédex (FR)
(74) Mandataire: Guérin, Michel

(56) Documents cités:
- DE-A- 2 362 394
- DE-B- 1 638 998
- GB-A- 1 005 520
- US-A- 3 457 479
- US-A- 3 660 704
- US-A- 3 777 587

## Description

La présente invention se rapporte au domaine des vérins électriques. De nos jours les vérins électriques sont utilisés de façon de plus en plus courante en robotique industrielle, en aéronautique et dans bien d'autres domaines encore. Dans les avions notamment ils servent à actionner les commandes de vol telles que volets, gouvernes ...

Les vérins électriques sont compacts et souples d'emploi. Ils ne nécessitent que très peu de maintenance en utilisation opérationnelle par rapport aux vérins hydrauliques qui sont sujets aux fuites.

Il existe deux catégories de vérins électriques : les verins linéaires qui transforment un mouvement rotatif en un mouvement linéaire et les vérins rotatifs qui transforment un mouvement rotatif à grande vitesse et petit couple en un mouvement rotatif à petite vitesse et grand couple.

Un vérin électrique linéaire comporte généralement un moteur électrique dont l'arbre de sortie entraîne en rotation une tige filetée principale. Cette tige filetée est solidaire d'un écrou immobilisé en rotation lui-même solidaire d'un élément actif en forme de tige. Lorsque la tige filetée principale est entraînée en rotation, l'écrou se déplace en translation et il entraîne dans son mouvement l'élément actif. C'est le déplacement en translation de l'élément actif qui agit sur la pièce que l'on désire actionner. L'arbre de sortie du moteur, la tige filetée principale et l'écrou sont logés dans une enveloppe qui forme le corps du vérin. L'élément actif sort du corps du vérin.

Dans un vérin rotatif, l'élément actif est entraîné en rotation. Cet élément actif est généralement couplé au moteur par l'intermédiaire d'un réducteur de vitesse.

Lors du fonctionnement du vérin, on cherche à connaître la position linéaire ou angulaire de l'élément actif. Généralement on utilise des capteurs de position rotatifs de type inductif ou potentiométrique couplés à l'arbre du moteur électrique à la suite du rotor.

Ils sont couplés à l'arbre du moteur soit directement, soit par l'intermédiaire d'une démultiplication par pignons dentés ou d'un système roue et vis sans fin réversible. Ce montage nécessite une réserve d'espace spécifique pour loger le capteur de position.

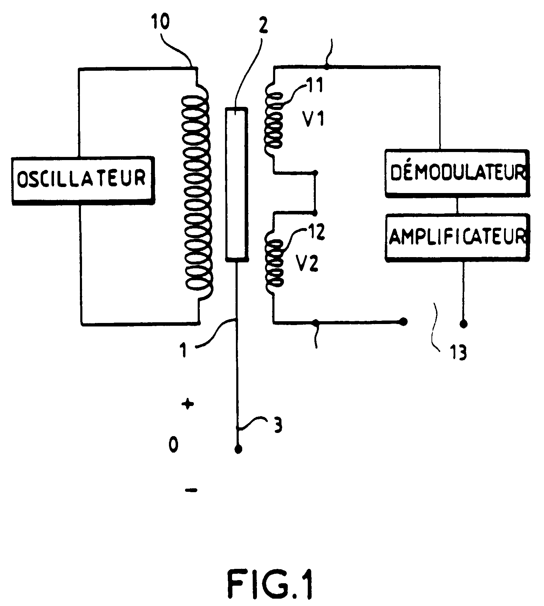

Dans le cas de vérins linéaires, on peut aussi utiliser un capteur de position communément appelé LVDT pour la dénomination anglaise "Linear Variable Differential Transformer". Un capteur de position de ce type est représenté sur la figure 1.

Il comporte un bobinage primaire 10 alimenté par un signal alternatif et deux bobinages secondaires 11, 12. Un équipage mobile 1 comprenant à une extrémité un noyau ferromagnétique 2 coulisse à l'intérieur des bobinages 10, 11, 12. L'autre extrémité 3 de l'équipage mobile 1 est solidaire de l'élément (non représenté) dont on veut connaître la position. Les bobinages forment le corps électromagnétique du capteur de position.

Les amplitudes des tensions V1, V2 présentes respectivement aux bornes du premier bobinage secondaire 11 et du deuxième bobinage secondaire 12 dépendent de la position linéaire de l'équipage mobile 1. Les bobinages secondaires 11, 12 connectés en série et en opposition de phase ont une borne 14 commune. L'autre borne 15 du premier bobinage secondaire 11 est distincte de l'autre borne 16 du deuxième bobinage secondaire 12.

Le signal électrique recueilli entre les bornes 15 et 16 est la différence entre les tensions V1 et V2. Ce signal est redressé. Une sortie 13 du détecteur de position fournit le signal redressé et éventuellement amplifié représentatif de la position linéaire de l'équipage mobile 1.

Ce capteur est associé au vérin de la manière suivante : son corps électromagnétique est solidaire du corps du vérin et l'extrémité de l'équipage mobile, opposée au noyau ferromagnétique, est solidaire de l'élément actif. Le signal électrique recueilli en sortie du capteur de position est représentatif de la position de l'élément actif. Le capteur est extérieur au corps du vérin. Il peut être soumis à des conditions d'environnement sévères et doit alors être protégé. Ces conditions peuvent être des températures extrêmes, des chocs, des vibrations et des rayonnements électromagnétiques parasites. La course de l'équipage mobile est égale à celle de l'élément actif du vérin et plus cette course est grande plus le volume et le poids du capteur LVDT sont importants.

Le brevet US-A-3 660 704 décrit un vérin électrique équipé d'un capteur de position logé dans l'enveloppe du verin. Le capteur de position comporte un équipage mobile électromagnétique qui coulisse autour d'une tige en fer doux.

La présente invention vise à remédier à ces inconvénients. Elle propose un vérin électrique équipé d'un capteur de position de type LVDT qui est compact, et dont le poids est réduit. Le capteur de position est protégé des chocs, des vibrations, des rayonnements électromagnétiques. La course de l'équipage mobile peut être optimisée, des capteurs standards peuvent être utilisés quelle que soit la course de l'élément actif du vérin.

La présente invention propose un vérin électrique comportant un élément actif émergeant d'une enveloppe, actionné par un moteur tournant, le vérin étant équipé d'un capteur de position, loge dans l'enveloppe comportant un équipage mobile, et fournissant un signal électrique représentatif de la position de l'élément actif.

Selon l'invention, l'équipage mobile coulisse dans un corps électromagnétique et le capteur de position est associé à un dispositif auxiliaire solidaire d'un côté de l'arbre du moteur et de l'autre de l'équipage mobile qui est immobilisé en rotation. Le dispositif auxiliaire sans action sur l'élément actif transforme le mouvement de rotation du moteur en un mouvement de translation communiqué à l'équipage mobile.

Ce dispositif auxiliaire peut être formé d'un écrou auxiliaire solidaire de l'arbre du moteur et d'une tige filetée auxiliaire fixée à l'équipage mobile.

De préférence, l'équipage mobile est immobilisé en rotation à l'aide d'un guide solidaire du corps électromagnétique .

On logera de préférence le capteur de position dans un alésage du rotor du moteur, son corps électromagnétique étant fixé à l'enveloppe du vérin.

Le vérin peut être un vérin linéaire. On prévoira un dispositif principal solidaire d'un côté de l'arbre du moteur et de l'autre de l'élément actif pour transformer le mouvement rotatif du moteur en un mouvement de translation communiqué à l'élément actif. Ce dispositif principal est de préférence formé d'un écrou principal et d'une tige filetée principale.

L'équipage mobile peut avoir une course égale à ou différente de celle de l'élément actif en fonction du choix des pas des tiges filetées principale et auxiliaire.

Le vérin peut être rotatif. Dans cette variante, l'élément actif est solidaire de l'arbre du moteur par l'intermédiaire d'un réducteur de vitesse.

L'invention sera mieux comprise et d'autres avantages apparaîtront à la lecture de la description suivante illustrée des figures jointes parmi lesquelles :
- la figure 1, déjà décrite, représente le schéma d'un capteur de position de type LVDT ;
- la figure 2 représente un vérin électrique équipé d'un capteur de position selon l'art connu ;
- la figure 3 représente un vérin électrique linéaire équipé d'un capteur de position selon l'invention ;
- la figure 4 représente un vérin électrique rotatif équipé d'un vérin électrique selon l'invention.

Sur ces figures, les mêmes éléments sont repérés avec les mêmes références. Dans un souci de clarté les proportions réelles ne sont pas respectées.

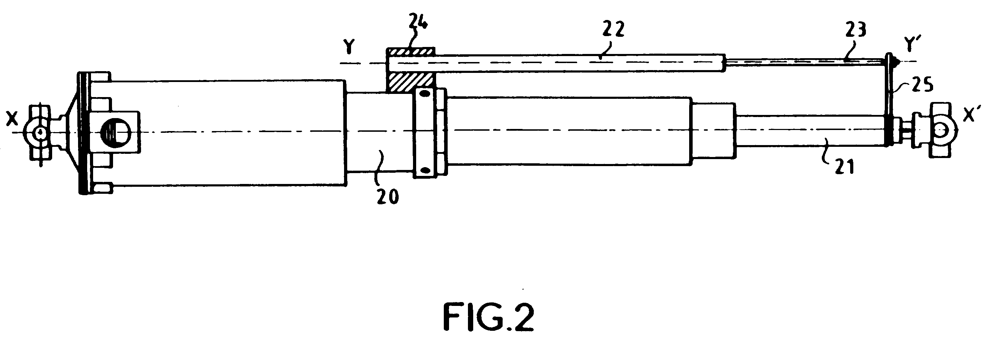

La figure 2 représente un vérin électrique linéaire muni d'un capteur de position de type LVDT selon l'art connu. Le corps du vérin porte la référence 20 et l'élément actif 21. Le corps électromagnétique du capteur LVDT porte la référence 22 et l'équipage mobile la référence 23.

L'élément actif 21 se déplace en translation selon un axe XX'. Le capteur de position est disposé selon un axe YY' parallèle à l'axe XX'. Son équipage mobile 23 se déplace en translation selon l'axe YY'. Le corps électromagnétique 22 du capteur est solidaire, par l'intermédiaire d'un premier élément de fixation 24, du corps 20 du vérin.

L'équipage mobile 23 est solidaire de l'élément actif 21 par l'intermédiaire d'un second élément de fixation 25.

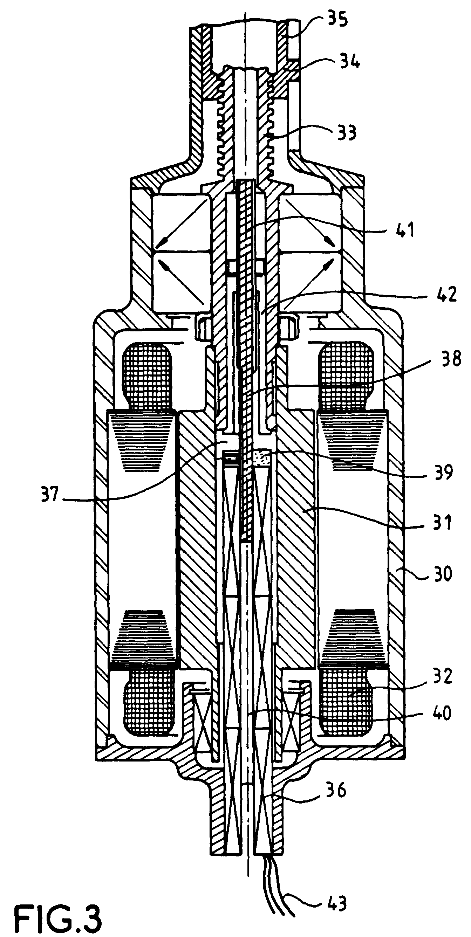

La figure 3 représente, selon l'invention, un vérin éléctrique linéaire muni d'un capteur de position de type LVDT.

La référence 30 représente l'enveloppe du vérin. A l'intérieur de cette enveloppe 30 se trouve un moteur électrique avec un rotor 31 placé à l'intérieur d'un stator 32. Le rotor 31 a globalement la forme d'un cylindre creux.

Le rotor 31 entraîne en rotation une tige filetée principale 33 sur laquelle se visse un écrou principal 34 immobilisé en rotation.

L'écrou principal 34 est solidaire d'un élément actif 35 en forme de tige qui émerge à l'extérieur de l'enveloppe 30 du vérin. Le dispositif tige filetée principale et écrou principal transforme le mouvement de rotation du moteur en un mouvement de translation communiqué à l'élément actif 35.

Le capteur de position de type LVDT est placé à l'intérieur du vérin. Le corps électromagnétique du capteur porte la référence 36. Il est fixé à l'enveloppe 30. Il comporte trois bobinages : le bobinage central constitue le primaire et les deux autres situés de part et d'autre du primaire constituent les deux secondaires. Il est logé dans un alésage 37 intérieur au rotor 31. L'équipage mobile du capteur porte la référence 38. Cet équipage mobile 38 comporte à une extrémité un noyau plongeur 40 ferromagnétique qui coulisse en translation dans le corps électromagnétique 36. L'équipage mobile 38 est immobilisé en rotation par un guide 39 fixé au corps électromagnétique 36.

L'autre extrémité de l'équipage mobile 38 se termine par une tige filetée auxiliaire 41 qui se visse dans un écrou auxiliaire 42 solidaire du rotor 31. L'écrou auxiliaire 42 de l'équipage mobile 38 est entraîné en rotation par le rotor 31. Il peut être fixé directement sur le rotor 31 ou bien sur la tige filetée principale 33 du vérin comme sur la figure 3.

Sa rotation entraîne dans un mouvement de translation l'équipage mobile 38 qui est retenu en rotation par le guide 39. Le déplacement en translation de l'équipage mobile est fonction du déplacement de l'élément actif 35 du vérin. Une sortie électrique 43 est prévue du côté du corps électromagnétique 36 pour recueillir le signal électrique en sortie du capteur LVDT.

La position de l'équipage mobile 38 est représentative de la position linéaire de l'élément actif 35 du vérin. Ce type de montage permet de limiter au strict minimum l'augmentation de longueur axiale ou tout supplément de volume latéral à prévoir pour l'implantation du capteur de position.

La course de l'équipage mobile 38 peut être égale à celle de l'élément actif 35 du vérin si la tige filetée auxiliaire 41 a un pas égal à celui de la tige filetée principale 33 du vérin. Une variante de cette disposition permet de réduire ou bien d'allonger la course de l'équipage mobile 38 en choisissant le pas de la tige filetée principale du vérin différent du pas de la tige filetée auxiliaire.

Lorsque le pas de la tige filetée auxiliaire est plus petit que le pas de la tige filetée principale, la course de l'équipage mobile est plus petite que la course de l'élément actif. On a réduit l'encombrement du capteur de position.

Dans le cas contraire, on allonge la course de l'équipage mobile 38 et on augmente la précision du réglage de la position de l'élément actif 35 du vérin.

On peut par exemple obtenir une course de l'équipage mobile égale à 20 % de celle de l'élément actif 35 du vérin en choisissant un pas de 1 millimètre pour la tige filetée auxiliaire 41, et un pas de 5 millimètres pour la tige filetée principale 33 du vérin.

Le capteur de position logé dans le rotor 31 est parfaitement protégé de l'environnement extérieur. Il n'est plus nécessaire de prévoir une protection supplémentaire contre les chocs, les vibrations, les parasites électromagnétiques rayonnés, etc ...

Le choix des pas de la tige filetée principale et de la tige filetée auxiliaire du vérin permet d'optimiser la course de l'équipage mobile et d'utiliser des capteurs de position standards quelle que soit la course du vérin. Cette optimisation permet de réduire l'encombrement, la masse et le coût du vérin ainsi équipé.

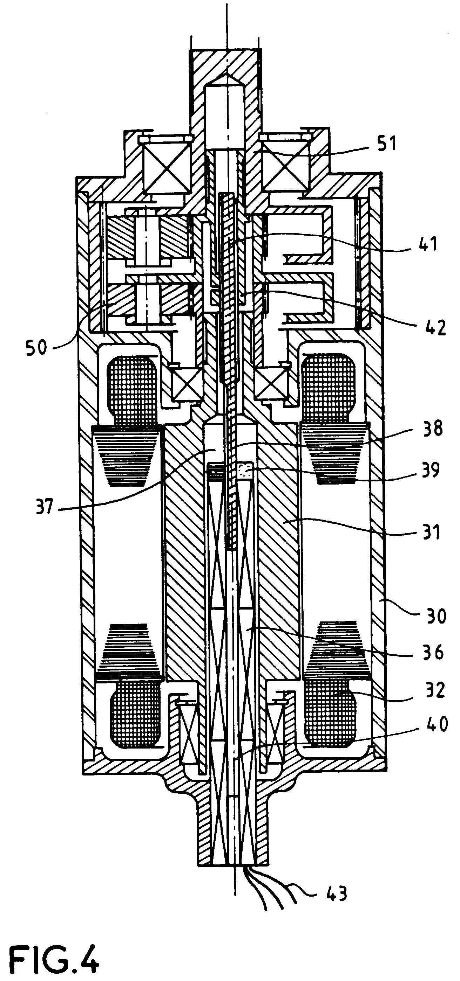

Le capteur de position peut aussi être monté dans un vérin électrique rotatif. C'est ce que représente la figure 4.

Sur la figure 4, on retrouve comme sur la figure 3 l'enveloppe du vérin rotatif avec la référence 30, le rotor 31, le stator 32.

Le rotor 31 est couplé à un réducteur vitesse 50 dont la sortie entraîne en rotation l'élément actif 51 du vérin qui est un arbre.

Le capteur de position est logé dans le vérin. Son corps électromagnétique porte la référence 36 comme sur la figure 3. Il est disposé dans l'alésage 37 intérieur au rotor. L'équipage mobile référencé 38 est immobilisé en rotation par un guide 39 fixé au corps électromagnétique 36.

L'extrémité de l'équipage mobile 38 opposée au noyau plongeur 40 se termine par une tige filetée 41 qui se visse dans un écrou 42 solidaire du rotor 31. Il est préférable que l'écrou 42 soit fixé sur l'arbre 51 de sortie du réducteur de vitesse 50. La rotation de l'arbre 51 de sortie du réducteur de vitesse entraîne dans un mouvement de translation l'équipage mobile 38 car il est retenu en rotation par le guide 39.

Le déplacement en translation de l'équipage mobile 38 est fonction de la rotation de l'élément actif 51 du vérin. La position de l'équipage mobile 38 est représentative de la position angulaire de l'élément actif 51 du vérin.

## Revendications

1. Vérin électrique comportant un élément actif (35) actionné par un moteur tournant et émergeant d'une enveloppe (30), le vérin étant équipé d'un capteur de position logé dans l'enveloppe (30), comportant un équipage mobile (38),fournissant un signal électrique représentatif de la position de l'élément actif (35), caractérisé en ce que l'équipage mobile (38) coulisse dans un corps électromagnétique (36) et en ce que le capteur de position est associé à un dispositif auxiliaire (41, 42) solidaire d'un côté de l'arbre du moteur et de l'autre de l'équipage mobile (38) qui est immobilisé en rotation, ce dispositif auxiliaire (41, 42) sans action sur l'élément actif transformant le mouvement de rotation du moteur en un mouvement de translation communiqué à l'équipage mobile (38) du capteur de position.

2. Vérin électrique selon la revendication 1, caractérisé en ce que le dispositif auxiliaire comporte un écrou auxiliaire (42) solidaire de l'arbre du moteur et une tige filetée auxiliaire (41) fixée à l'équipage mobile (38), l'écrou auxiliaire (42) se vissant autour de la tige filetée auxiliaire (41).

3. Vérin électrique selon l'une des revendications 1 ou 2, caractérisé en ce que l'équipage mobile (38) est immobilisé en rotation à l'aide d'un guide (39) solidaire du corps électromagnétique (36).

4. Vérin électrique selon l'une des revendications 1 à 3, caractérisé en ce que le capteur de position est logé dans un alésage du rotor (31) du moteur, son corps électromagnétique (36) étant fixé à l'enveloppe (30) du vérin.

5. Vérin électrique selon l'une des revendications 1 à 4, caractérisé en ce que l'élément actif (35) est entraîné en translation, un dispositif principal (33, 34) solidaire d'un côté de l'arbre du moteur et de l'autre de l'élément actif (35) étant prévu pour transformer le mouvement rotatif du moteur en un mouvement de translation communiqué à l'élément actif (35).

6. Vérin électrique selon la revendication 5, caractérisé en ce que le dispositif principal comporte une tige filetée principale (33), solidaire de l'arbre du moteur et un écrou principal (34) immobilisé en rotation, solidaire de l'élément actif (35), la tige filetée principale (33) se vissant dans l'écrou principal (34).

7. Vérin électrique selon la revendication 6, caractérisé en ce que l'équipage mobile (38) a une course égale à celle de l'élément actif (35) lorsque le pas de la tige filetée principale (33) est égal au pas de la tige filetée auxiliaire (41).

8. Vérin électrique selon la revendication 6, caractérisé en ce que l'équipage mobile (38) a une course plus grande que celle de l'élément actif (35) lorsque le pas de la tige filetée auxiliaire (41) est plus grand que le pas de la tige filetée principale (33).

9. Vérin électrique selon la revendication 6, caractérisé en ce que l'équipage mobile (38) a une course plus petite que celle de l'élément actif (35) lorsque le pas de la tige filetée auxiliaire (41) est plus petit que le pas de la tige filetée principale (33).

10. Vérin électrique selon l'une des revendications 1 à 4, caractérisé en ce que l'élément actif est entraîné en rotation et est solidaire de l'arbre du moteur par l'intermédiaire d'un réducteur de vitesse (50).

## Patentansprüche

1. Elektrischer Stellzylinder mit einem aktiven Element (35), das von einem Dreh-Motor betätigt wird und aus einem Gehäuse (30) austritt, wobei der Stellzylinder mit einem Stellungssensor versehen ist, der in dem Gehäuse (30) aufgenommen ist, ein bewegliches Teil (38) aufweist und ein für die Position des aktiven Elementes (35) repräsentatives elektrisches Signal liefert, dadurch gekennzeichnet, daß das bewegliche Teil (38) in einem elektromagnetischen Körper (36) gleitet und daß der Stellungssensor einer Hilfsvorrichtung (41, 42) zugeordnet ist, die zum einen fest mit der Welle des Motors und zum anderen fest mit dem beweglichen Teil (38) verbunden ist, das drehfest ist, wobei diese Hilfsvorrichtung (41, 42), die ohne Wirkung auf das aktive Element ist, die Rotationsbewegung des Motors in eine Translationsbewegung umsetzt, die auf das bewegliche Teil (38) des Stellungssensors übertragen wird.

2. Elektrischer Stellzylinder nach Anspruch 1, dadurch gekennzeichnet, daß die Hilfsvorrichtung eine Hilfsmutter (42) aufweist, die fest mit der Welle des Motors verbunden ist, und eine mit einem Gewinde versehene Hilfsstange (41), die an dem beweglichen Teil (38) befestigt ist, wobei sich die Hilfsmutter (42) auf der mit einem Gewinde versehenen Hilfsstange (41) verschraubt.

3. Elektrischer Stellzylinder nach einem der Ansprüche 1 und 2, dadurch gekennzeichnet, daß das bewegliche Teil (38) mittels einer Führung (39) drehfest gehalten ist, die fest mit dem elektromagnetischen Körper (36) verbunden ist.

4. Elektrischer Stellzylinder nach einem der Ansprüche 1 bis 3, dadurch gekennzeichnet, daß der Stellungssensor in einer Bohrung des Rotors (31) des Motors aufgenommen ist, wobei sein elektromagnetischer Körper (36) am Gehäuse (30) des Stellzylinders befestigt ist.

5. Elektrischer Stellzylinder nach einem der Ansprüche 1 bis 4, dadurch gekennzeichnet, daß das aktive Element (35) translatorisch angetrieben wird, wobei eine Hauptvorrichtung (33, 34), die zum einen fest mit der Welle des Motors und zum anderen fest mit dem aktiven Element (35) verbunden ist, vorgesehen ist, um die Drehbewegung des Motors in eine Translationsbewegung umzusetzen, die auf das aktive Element (35) übertragen wird.

6. Elektrischer Stellzylinder nach Anspruch 5, dadurch gekennzeichnet, daß die Hauptvorrichtung eine mit einem Gewinde versehene Hauptstange (33) aufweist, die fest mit der Welle des Motors verbunden ist, und eine drehfeste Hauptmutter (34), die fest mit dem aktiven Element (35) verbunden ist, wobei sich die mit einem Gewinde versehene Hauptstange (33) in der Hauptmutter (34) verschraubt.

7. Elektrischer Stellzylinder nach Anspruch 6, dadurch gekennzeichnet, daß das bewegliche Teil (38) einen Bewegungsweg aufweist, der gleich demjenigen des aktiven Elementes (35) ist, wenn die Steigung der mit einem Gewinde versehenen Hauptstange (33) gleich der Steigung der mit einem Gewinde versehenen Hilfsstange (41) ist.

8. Elektrischer Stellzylinder nach Anspruch 6, dadurch gekennzeichnet, daß das bewegliche Teil (38) einen Bewegungsweg hat, der größer als derjenige des aktiven Elementes (35) ist, wenn die Steigung der mit einem Gewinde versehenen Hilfsstange (41) größer als die Steigung der mit einem Gewinde versehenen Hauptstange (33) ist.

9. Elektrischer Stellzylinder nach Anspruch 6, dadurch gekennzeichnet, daß das bewegliche Teil (38) einen Bewegungsweg aufweist, der kleiner als derjenige des aktiven Elementes (35) ist, wenn die Steigung der mit einem Gewinde versehenen Hilfsstange (41) kleiner als die Steigung der mit einem Gewinde versehenen Hauptstange (33) ist.

10. Elektrischer Stellzylinder nach einem der Ansprüche 1 bis 4, dadurch gekennzeichnet, daß das aktive Element rotatorisch angetrieben wird und über ein Untersetzungsgetriebe (50) fest mit der Welle des Motors verbunden ist.

## Claims

1. Electric jack including an active element (35) actuated by a rotating motor and emerging from a casing (30), the jack being equipped with a position sensor housed in the casing (30), including a movable assembly (38), supplying an electrical signal representative of the position of the active element (35), characterized in that the movable assembly (38) slides in an electromagnetic body (36) and in that the position sensor is associated with an auxiliary device (41, 42) integral, on the one hand, with the shaft of the motor and, on the other hand, with the movable assembly (38) which is immobilized in rotation, this auxiliary device (41, 42), without acting on the active element, converting the rotational movement of the motor into a translational movement communicated to the movable assembly (38) of the position sensor.

2. Electric jack according to Claim 1, characterized in that the auxiliary device includes an auxiliary nut (42) integral with the shaft of the motor and an auxiliary threaded rod (41) fixed to the movable assembly (38), the auxiliary nut (42) being screwed around the auxiliary threaded rod (41).

3. Electric jack according to one of Claims 1 and 2, characterized in that the movable assembly (38) is immobilized in rotation using a guide (39) integral with the electromagnetic body (36).

4. Electric jack according to one of Claims 1 to 3, characterized in that the position sensor is housed in a bore of the rotor (31) of the motor, its electromagnetic body (36) being fixed to the casing (30) of the jack.

5. Electric jack according to one of Claims 1 to 4, characterized in that the active element (35) is driven in translation, a main device (33, 34) integral, on the one hand, with the shaft of the motor and, on the other hand, with the active element (35) being provided in order to convert the rotating movement of the motor into a translational movement communicated to the active element (35).

6. Electric jack according to Claim 5, characterized in that the main device includes a main threaded rod (33), integral with the shaft of the motor, and a main nut (34) immobilized in rotation, integral with the active element (35), the main threaded rod (33) being screwed into the main nut (34).

7. Electric jack according to Claim 6, characterized in that the movable assembly (38) has a range of travel equal to that of the active element (35) when the pitch of the main threaded rod (33) is equal to the pitch of the auxiliary threaded rod (41).

8. Electric jack according to Claim 6, characterized in that the movable assembly (38) has a range of travel which is longer than that of the active element (35) when the pitch of the auxiliary threaded rod (41) is larger than the pitch of the main threaded rod (33).

9. Electric jack according to Claim 6, characterized in that the movable assembly (38) has a range of travel which is shorter than that of the active element (35) when the pitch of the auxiliary threaded rod (41) is smaller than the pitch of the main threaded rod (33).

10. Electric jack according to one of Claims 1 to 4, characterized in that the active element is driven in rotation and is integral with the shaft of the motor by means of a step-down gear (50).
